# EUROPÄISCHE PATENTSCHRIFT

(11) **EP 1 084 339 B1**
(45) Veröffentlichungstag und Bekanntmachung des Hinweises auf die Patenterteilung: **23.04.2003**
(21) Anmeldenummer: 99924560.8
(22) Anmeldetag: 31.05.1999
(51) Int. Cl.: F02F 7/00, F16C 9/02

(54) **KURBELGEHÄUSE AUS LEICHTMETALL FÜR EINEN VERBRENNUNGSMOTOR**
CRANKCASE MADE OF LIGHT METAL FOR AN INTERNAL COMBUSTION ENGINE
CARTER DE VILEBREQUIN EN METAL LEGER DESTINE A UN MOTEUR A COMBUSTION INTERNE

(30) Priorität: 03.06.1998 AT 94998
(43) Veröffentlichungstag der Anmeldung: 21.03.2001
(73) Patentinhaber: Miba Sintermetall GmbH, 4663 Laakirchen (AT)
(72) Erfinder: MENZL, Karl-Heinz, D-81735 München (DE)
(74) Vertreter: Hübscher, Gerhard, Dipl.-Ing.
(86) Internationale Anmeldenummer: AT9900136
(87) Internationale Veröffentlichungsnummer: WO99063216

(56) Entgegenhaltungen:
- WO-A-95/31637
- DE-A- 3 829 163
- DE-A- 19 526 890
- US-A- 5 203 854

## Beschreibung

### Technisches Gebiet

Die Erfindung bezieht sich auf ein Kurbelgehäuse aus Leichtmetall für einen Verbrennungsmotor mit einer durch die Kurbelwellenachse verlaufenden Teilungsfläche zwischen einem Gehäuseoberteil und einem Gehäuseunterteil, wobei der Gehäuseunterteil Gehäuseaußenwände und diese Gehäuseaußenwände verbindende Lagerwände mit Einsätzen aus einem Eisenwerkstoff aufweist, in denen Lagerschalen von Kurbelwellenlagern und beiderseits der Lagerschalen Lagerschrauben gelagert sind.

### Stand der Technik

Um bei Kurbelgehäusen aus Leichtmetall eine vorteilhafte Krafteinleitung vom Zylinderkopf zur Kurbelwelle zu erreichen und in diesem Zusammenhang eine steife Abstützung der Kurbelwellenlager zu erhalten, ist es bekannt (US 5 203 854), die Kurbelwellenlager mit den Lagerschrauben in Graugußeinsätzen des Unterteils des Kurbelgehäuses zu lagem. Diese Einsätze aus Grauguß, die zwischen den Gehäuseaußenwänden eingegossen sind und den Mittelteil der Lagerwände bilden, werden in Abhängigkeit von den Belastungen der Kurbelwellenlager bemessen und bestimmen aufgrund dieser Bemessung die Höhe des Unterteils des Kurbelgehäuses. Da das Schwingungsverhalten und damit das Körperschallverhalten des Kurbelgehäuses von seiner Biegesteifigkeit abhängt, ist hinsichtlich des Körperschallverhaltens der Elastizitätsmodul und das Trägheitsmoment maßgebend. Der Elastizitätsmodul der für Kurbelgehäuse eingesetzten Leichtmetalle beträgt angenähert nur die Hälfte des Elastizitätsmoduls von Grauguß, so daß Kurbelgehäuse aus Leichtmetall jenen aus Grauguß hinsichtlich des Körperschallverhaltens unterlegen sind, wenn nicht durch geeignete konstruktive Maßnahmen das Trägheitsmoment gesteigert und damit eine ausreichende Biegesteifigkeit sichergestellt werden kann. Zu diesem Zweck kann das Kurbelgehäuse eine Versteifung über die angeschlossene Ölwanne erfahren, die dann entsprechend aufwendig ausgebildet werden muß. Trotz des Einsatzes einer solchen aufwendigen Ölwanne bleibt das Körperschallverhalten der bekannten Kurbelgehäuse aus Leichtmetall jedoch unbefriedigend.

### Darstellung der Erfindung

Der Erfindung liegt somit die Aufgabe zugrunde, ein Kurbelgehäuse aus Leichtmetall der eingangs geschilderten Art so zu verbessern, daß ohne aufwendige Ölwannenausbildung ein befriedigendes Körperschallverhalten sichergestellt werden kann, ohne nachteilige Einflüsse auf die Kurbelwellenlagerung befürchten zu müssen.

Die Erfindung löst die gestellte Aufgabe dadurch, daß die Lagerwände zwischen den Gehäuseaußenwänden eine durchgehende Leichtmetallbrücke bilden, die gegenüber den Lagerwänden niedrigere Einsätze in von der Teilungsfläche ausgehenden Aussparungen aufnehmen und im Bereich der Lagerschrauben mit Durchtrittsöffnungen für deren Schraubenköpfe versehen sind.

Durch diese Maßnahmen wird zunächst sichergestellt, daß die Einsätze aus Eisenwerkstoff ausschließlich in Abhängigkeit von den Belastungen der Kurbelwellenlager bzw. von der Bemessung der Lagerschrauben ausgelegt werden können, ohne eine Beschränkung der Höhe des Gehäuseunterteils durch diese Einsätze in Kauf nehmen zu müssen. Die nunmehr im Vergleich zu den Einsätzen mögliche, erheblich größere Bauhöhe des Gehäuseunterteils bringt die angestrebte größere Biegesteifigkeit des Kurbelgehäuses mit sich, wobei eine aufwendige Ölwanne entfallen kann. Es wird somit eine weitgehend voneinander unabhängige Auslegung der die Belastungen der Kurbelwellenlager aufnehmenden Konstruktionsteile aus einem Eisenwerkstoff und der Leichtmetallteile erreicht, was zu einer sowohl hinsichtlich des Körperschallverhaltens als auch bezüglich der Kraftübertragung vorteilhaften Konstruktion führt, weil eben eine für die angestrebte Biegesteifigkeit ausreichende Höhe des Gehäuseunterteils unabhängig von der Höhe der Einsätze gewährleistet werden kann.

Entspricht die Höhe der Lagerwände zumindest dem halben Innenabstand der Gehäuseaußenwände, so können besonders günstige Konstruktionsverhältnisse sichergestellt werden, die nicht nur eine hohe Biegesteifigkeit des Gehäuseunterteils mit sich bringen, sondern auch den Ersatz einer herkömmlichen, tragenden Ölwanne durch einen einfachen Wannendeckel erlauben, weil in diesem Fall ein wesentlicher Teil der sonst üblichen Ölwanne durch den Gehäuseunterteil selbst gebildet wird.

Die Einbettung der aus einem Eisenwerkstoff bestehenden Einsätze in von der Teilungsfläche ausgehenden Aussparungen der zwischen den Gehäuseaußenwänden durchgehenden Leichtmetallbrücken der Lagerwände unterstützt außerdem die Verwendung von Einsätzen aus einem Sinterwerkstoff, der günstige Herstellungsbedingungen mit sich bringt, und zwar ohne Festigkeitsverluste.

### Kurze Beschreibung der Zeichnung

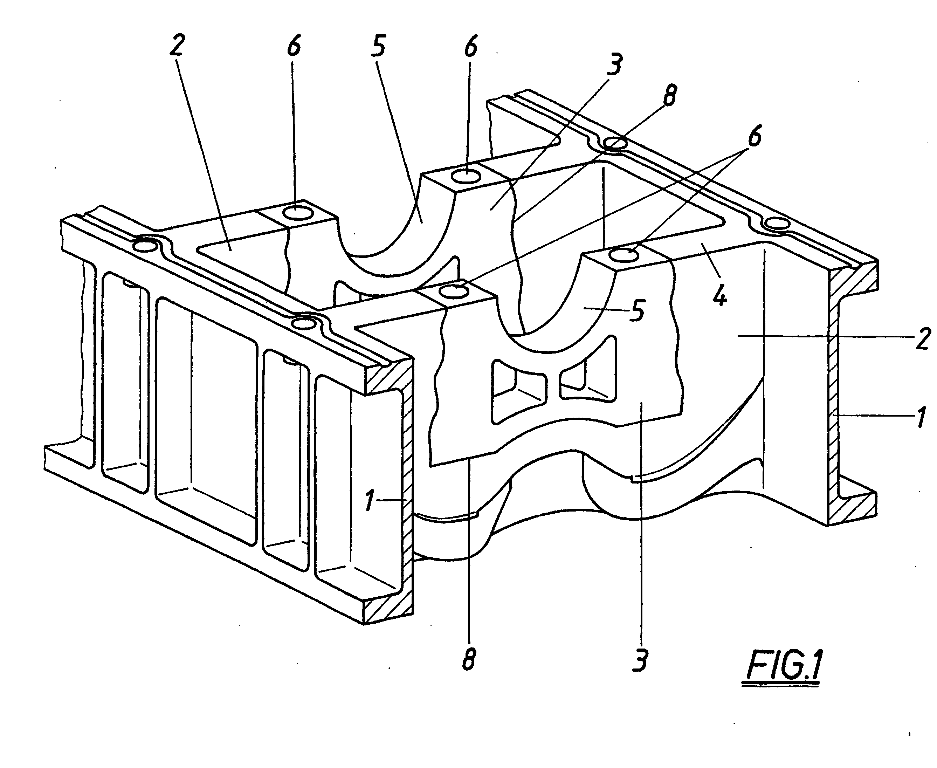

In der Zeichnung ist der Erfindungsgegenstand beispielsweise dargestellt. Es zeigen
- Fig. 1: das Gehäuseunterteil eines erfindungsgemäßen Kurbelgehäuses ausschnittsweise in einem vereinfachten Schaubild,
- Fig. 2: das Gehäuseunterteil in einem Querschnitt durch eine Lagerwand und
- Fig. 3: das Gehäuseunterteil ausschnittsweise im Bereich einer Lagerwand in einer Untersicht.

### Bester Weg zur Ausführung der Erfindung

Das dargestellte Gehäuseunterteil eines erfindungsgemäßen Kurbelgehäuses aus Leichtmetall weist in herkömmlicher Weise der Länge nach verlaufende Gehäuseaußenwände 1 und diese Gehäuseaußenwände 1 verbindende, dazu quer ausgerichtete Lagerwände 2 auf, die mit Einsätzen 3 aus einem Eisenwerkstoff, vorzugsweise aus Sintermetall, versehen sind. Diese Einsätze 3 bilden von der Trennfläche 4 zum Gehäuseoberteil ausgehende, im Querschnitt halbkreisförmige Aufnahmen 5 für die Lagerschaten der Kurbelwellenlager. Beidseits dieser Aufnahmen 5 sind in den Einsätzen 3 Bohrungen 6 für Lagerschrauben 7 vorgesehen, über die die Krafteinleitung von den Zylindern her in die Einsätze 3 erfolgt.

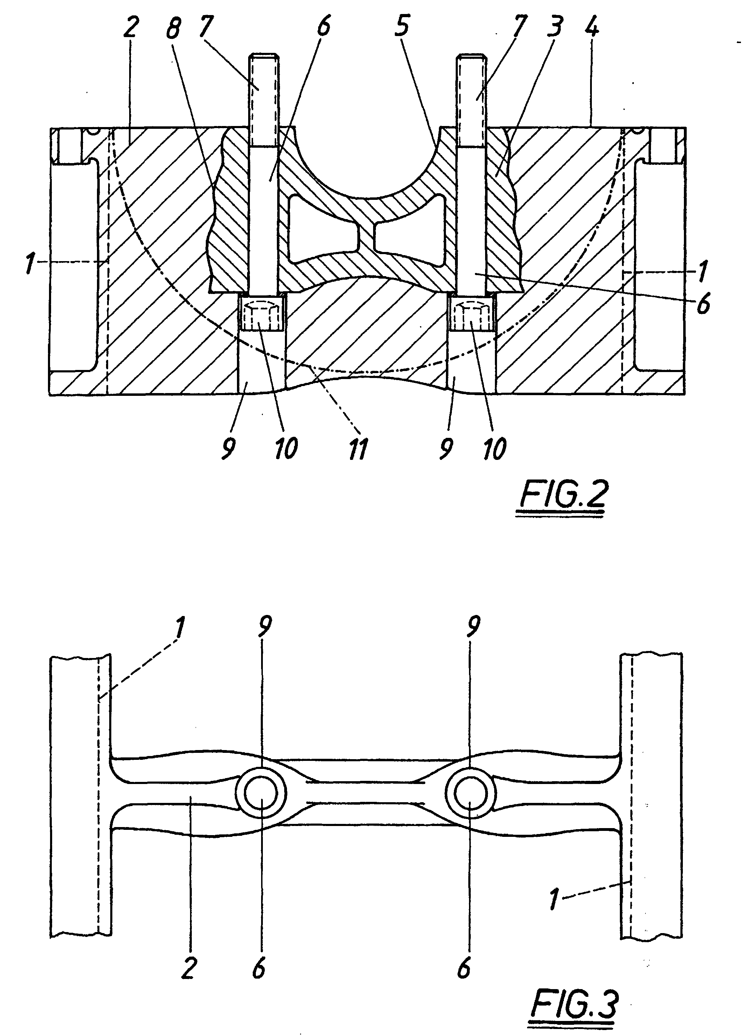

Im Gegensatz zu herkömmlichen Gehäuseunterteilen dieser Art erstrecken sich die Einsätze 3 aus Eisenwerkstoff nur über einen Teil der Höhe der Lagerwände 2, so daß die Lagerwände 2 eine durchgehende Leichtmetallbrücke zwischen den Gehäuseaußenwänden 1 bilden. Die Einsätze 3 sind in von der Trennfläche 4 ausgehenden Aussparungen 8 der Lagerwände 2 eingebettet, die im Bodenbereich der Aussparungen 8 mit Durchtrittsöffnungen 9 für die Schraubenköpfe 10 der Lagerschrauben 7 versehen sind. Die Lagerschrauben 7 können demnach durch die Durchtrittsöffnungen 9 hindurch in die Lagerbohrungen 6 der Einsätze 3 eingeführt und mit dem Gehäuseoberteil verschraubt werden. Bei der Auslegung der Lagerschrauben 7 braucht folglich das unterschiedliche Wärmedehnungsverhalten zwischen den Einsätzen 3 und den die Einsätze 3 aufnehmenden Leichtmetallbrücken der Lagerwände 2 nicht berücksichtigt zu werden, obwohl die Lagerwände 2 eine die Lagereinsätze 3 zumindest im Bereich der Einsätze 3 wesentlich übersteigende Höhe aufweisen. Dies bedeutet, daß die Einsätze 3 vor allem entsprechend den Belastungsanforderungen zur Aufnahme der Lagerkräfte ohne Berücksichtigung der erforderlichen Biegesteifigkeit des Gehäuseunterteils bemessen werden können, wodurch der Gewichtsanteil der Einsätze 3 vorteilhaft beschränkt werden kann. Die hinsichtlich des Körperschallverhaltens erforderliche hohe Biegesteifigkeit des Gehäuseunterteils muß wegen des im Vergleich zu einem Eisenwerkstoff niedrigeren Elastizitätsmoduls des Leichtmetalls durch ein vergrößertes Trägheitsmoment sichergestellt werden, das vor allem eine größere Bauhöhe für den Gehäuseunterteil erfordert. Wegen der von der Höhe der Einsätze 3 unabhängigen Höhe der Lagerwände 2 kann dieser Forderung ohne weiteres nachgekommen werden. Damit ist es möglich, den unteren Kurbelraum innerhalb des Gehäuseunterteiles unterzubringen, wie dies die strichpunktierte Kreislinie 11 in der Fig. 2 andeutet. Damit kann eine herkömmliche Ölwanne zur zusätzlichen Versteifung des Kurbelgehäuses entfallen und durch einen einfachen Deckel für das Gehäuseunterteil ersetzt werden.

Mit den geschilderten Maßnahmen gelingt es in vergleichsweise einfacher Art, ein vorteilhaftes Körperschallverhalten eines Kurbelgehäuses aus Leichtmetall zu erreichen, ohne im Bereich der Lastabtragung über die Kurbelwellenlager oder bezüglich der Gewichtsverhältnisse Nachteile in Kauf nehmen zu müssen.

## Patentansprüche

1. Kurbelgehäuse aus Leichtmetall für einen Verbrennungsmotor mit einer durch die Kurbelwellenachse verlaufenden Teilungsfläche (4) zwischen einem Gehäuseoberteil und einem Gehäuseunterteil, wobei der Gehäuseunterteil Gehäuseaußenwände (1) und diese Gehäuseaußenwände (1) verbindende Lagerwände (2) mit Einsätzen (3) aus einem Eisenwerkstoff aufweist, in denen Lagerschalen von Kurbelwellenlagem und beiderseits der Lagerschalen Lagerschrauben gelagert sind, **dadurch gekennzeichnet, daß** die Lagerwände (2) zwischen den Gehäuseaußenwänden (1) eine durchgehende Leichtmetallbrücke bilden, die gegenüber den Lagerwänden (2) niedrigere Einsätze (3) in von der Teilungsfläche (4) ausgehenden Aussparungen (8) aufnehmen und im Bereich der Lagerschrauben (7) mit Durchtrittsöffnungen (9) für deren Schraubenköpfe (10) versehen sind.

2. Kurbelgehäuse nach Anspruch 1, **dadurch gekennzeichnet, daß** die Höhe der Lagerwände (2) zumindest dem halben Innenabstand der Gehäuseaußenwände (1) entspricht.

3. Kurbelgehäuse nach Anspruch 1 oder 2, **dadurch gekennzeichnet, daß** die Einsätze (3) aus einem Sinterwerkstoff bestehen.

## Claims

1. A light-metal crankcase for an internal combustion engine with a dividing surface (4) between a casing upper part and a casing bottom part, said dividing surface extending through the crankshaft axis, the casing bottom part having casing outer walls (1) and bearing walls (2) connecting said outer walls and having inserts (3) of an iron material in which there are mounted bearing shells of crankshaft bearings and, on both sides of the bearing shells, bearing screws, **characterised in that** the bearing walls (2) form between the casing outer walls (1) a continuous light-metal bridge which accommodate inserts (3) lower than the bearing walls (2) in recesses (8) starting from the dividing surface (4) and are provided, in the region of the bearing screws (7), with passage openings (9) for the screw heads (10) thereof.

2. A crankcase according to claim 1, **characterised in that** the height of the bearing walls (2) is equivalent at least to half the internal distance between the casing outer walls (1).

3. A crankcase according to claim 1 or 2, **characterised in that** the inserts (3) consist of a sintered material.

## Revendications

1. Carter de vilebrequin en métal léger pour un moteur à combustion comportant une surface de division (4) s'étendant dans l'axe de vilebrequin, entre une partie supérieure de carter et une partie inférieure de carter, la partie inférieure de carter présentant des parois extérieures de carter (1) et des parois pour palier (2), reliant ces parois extérieures de carter (1), munies d'inserts (3) en matériau ferreux, dans lesquels sont montées les coquilles de palier appartenant à des paliers de vilebrequin et, de part et d'autre des coquilles de palier, des vis de palier, **caractérisé en ce que** les parois pour palier (2) forment, entre les parois extérieures de carter (1), un pont en métal léger continu, recevant, dans des évidements (8) partant de la face de division (4), des inserts (3) plus bas que les parois de palier (2) et munis, dans la zone des vis pour palier (7), d'ouvertures de passage (9) pour leurs têtes de vis (10).

2. Carter de vilebrequin selon la revendication 1, **caractérisé en ce que** la hauteur des parois pour palier (2) correspond au moins au demi-espacement intérieur des parois extérieures de carter (1).

3. Carter de vilebrequin selon la revendication 1, **caractérisé en ce que** les inserts (3) sont formés d'un matériau fritté.
